# FASCICULE DE BREVET EUROPEEN

(11) **EP 1 467 522 B1**
(45) Date de publication et mention de la délivrance du brevet: **05.07.2006**
(21) Numéro de dépôt: 04380064.8
(22) Date de dépôt: 25.03.2004
(51) Int. Cl.: H04L 12/28, H04M 11/06

(54) **Module distributeur configurable de services de communications pour des habitations et assimilés**
Konfigurierbares Modul für Kommunikationsdienste in Häusern
Configurable module for distributing communication services to the home

(30) Priorité: 08.04.2003 ES 200300826
(43) Date de publication de la demande: 13.10.2004
(73) Titulaire: Simon, S.A., 08013 Barcelona (ES)
(72) Inventeur: Aubert Capella, Joaquin, 08017 Barcelona (ES)
(74) Mandataire: Espiell Volart, Eduardo Maria

(56) Documents cités:
- EP-A- 0 928 096
- WO-A-01/06751
- US-B1- 6 449 362
- THE HOME PHONELINE NETWORKING ALLIANCE: "Simple, High-speed Ethernet technology for the home"[Online] 1998, pages 1-11, XP002328324 Extrait de l'Internet: URL:http://www.homepna.org/docs/wp1.pdf> [extrait le 2005-05-17]

## Description

Cette invention concerne un module distributeur configurable de services de communications, spécialement destiné à son application dans des habitations, des bureaux et assimilés et dont les caractéristiques essentielles sont décrites ci-après.

La fonction basique du module distributeur objet de cette invention, est d'offrir une grande flexibilité aux services de communications et de données qui arrivent actuellement aux installations des maisons et du secteur tertiaire, ce dernier étant entendu comme tout ce qui concerne le petit commerce, les sociétés de services, l'industrie moyenne et assimilés.

### ÉTAT DE L'ART

Les techniques modernes de communication qui existent actuellement ont permis dans la pratique que même les domiciles privés sont pourvus de réseaux domestiques de communication, de réception de données et de domotique, avec les avantages que cela comporte.

Un réseau pour téléphonie et communication de données utilissant liaisons téléphoniques dans l'interieur des residences principales on en autres édifices et connu du document WO 01/06751.

Ces installations sont régulées conformément aux normes ICT (Infrastructures Communes de Télécommunications), qui oblige à ce que l'on dispose déjà dans les édifices nouvellement construits de tous les éléments normalisés permettant une connexion rapide et facile des réseaux extérieurs de communications et leur distribution à l'intérieur des dépendances.

En ce qui concerne la distribution de ces services, attendu ce qui est réglementé par l'ICT, l'état actuel de la technique reste limité à l'agencement des éléments unitaires permettant de distribuer les services de façon directe et précise sans arriver à obtenir une centralisation de l'action de distribution et de sa commande, ainsi que la configuration souhaitée ou nécessaire, à certains moments, du type de service pouvant être disposé à un certain point ou prise ni leur interconnexion.

En plus de respecter la norme, l'ensemble du module distributeur de services s'occupera de façon adéquate des aspects concernant la sécurité et la robustesse du propre ensemble.

Le module distributeur configurable, objet de la présente invention agira comme centrale de services de communications à l'intérieur de l'habitation ou assimilé, en permettant leur distribution, toujours de façon échelonnable et flexible, aux diverses prises de communication de l'habitation, ainsi que les différentes services d'accès, aussi bien ceux existants que ceux qui sont en cours d'expansion sur le marché résidentiel.

Avec ce système on atteindra également l'objectif, du point de vue de l'installation, d'optimiser la solution de câblage.

Dans le domaine domestique, les normes ICT déjà évoquées, obligent à mettre en place l'installation spécifique de tous les éléments de réception des services de télécommunications et de données. Le module distributeur configurable, objet de cette invention est compatible avec les spécifications requises par l'ICT, aussi bien pour les dimensions et les possibilités de connexion de l'extérieur, que pour les diverses fonctions qu'il peut mettre en oeuvre.

Ces fonctions seront les suivantes:

### Le réseau informatique:

Il permettra de générer un réseau informatique (LAN) parallèle aux services d'accès, sur lequel pourront être connectés indifféremment les divers éléments informatiques de la maison, tels que des PC, des imprimantes, des scanners, de modems de connexion et d'autres dispositifs informatiques.

Pour ce, il faudra tenir compte du fait que les différentes connexions au réseau informatique depuis les points installés et configurés doivent être parallèles aux autres services, ne sont absolument pas affectées.

Le réseau informatique aura de préférence le format Fast Ethernet, pour lequel, le système disposera d'un Switch dont la vitesse sera de 10/100.

### La capacité d'accès multiple:

Simultanément au réseau informatique, la communication des données et de voix de l'habitation ou espace assimilé est associée à trois formes d'accès de voix et de données différenciées, que le système doit comporter.
- La ligne téléphonique
- La ligne ADSL
- La transmission par câble

Dans les trois cas, il faut considérer une ligne double, ayant la capacité de disposer de deux fournisseurs différents, un pour chaque ligne. Cependant, la deuxième de ces lignes d'accès dans les cas où on disposerait d'ADSL et de câble, ne pourra être qu'une deuxième ligne téléphonique.

Dans ce type d'accès, il faut tenir compte des aspects fonctionnels suivants:
- La capacité de modification du service associé à chaque point terminal du réseau (prise finale); et
- La capacité d'échanger le type d'accès extérieur: Double ligne téléphonique, ADSL ou Câble.

### L'accès à internet:

La fonctionnalité d'accès à internet dépend du moyen d'accès choisi et défini à l'alinéa d'accès multiple. Il faut donc tenir compte des types suivants:
- Accès à internet au moyen de la ligne téléphonique: accès au moyen de modem directement.
- Accès à internet au moyen de la ligne ADSL: accès au moyen de modem au canal de données sortant directement du Splitter.
- Accès à internet au moyen de câble: accès au moyen du propre câblage de la solution d'accès.

### Les prises terminales du réseau:

En ce qui concerne les prises dont il faut tenir compte pour le module, elles comporteront des prises doubles permettant que les services soient simultanés: d'une part le service du réseau informatique et d'autre part le service téléphonique de voix.

### L'alimentation du module:

L'ensemble, afin d'éviter de possibles problèmes de variations des alimentations qui pourront être effectuées, ainsi que pour tenir compte des aspects concernant la sécurité, doit être autonome en tenant compte qu'il faut disposer de phase neutre et de terre.

### Le suppresseur de ligne:

Le module doit permettre la désactivation de toute combinaison des accès de l'ensemble pour les différents services.

### I,e câblage et la connexion aux bornes:

Le câblage depuis l'ensemble jusqu'au différentes prises dont l'application projetée aura besoin doit être unique et le même pour tous les services qui y seront reliés, en tenant compte que le choix se fera dans le module central du système et qu'il pourra être modifié en fonction des besoins de chaque moment.

La connexion aux bornes du module sera simple et au moyen de l'application d'agrafes permettant des modifications postérieures de la configuration de façon simple et rapide.

L'existence de deux éléments de connexion supplémentaires (sortie auxiliaire et connecteur) permet de couvrir la solution d'intégration avec un routeur. Pour ce, les deux connexions seront standard et aptes pour la connexion de câbles extérieure à l'ensemble.

### La sécurité:

Le système disposera d'éléments de sécurité électronique, de sorte que si une anomalie de l'alimentation se produit, ni le module ni les éléments postérieurs à celui-ci ne seront affectés.

### La capacité d'échelonnement de l'ensemble:

Afin de pouvoir disposer de plus de points du réseau que ceux que possède un module standard, l'ensemble permet la connexion de plusieurs modules en série; de sorte qu'à travers les mêmes accès du premier module, on puisse distribuer des services au reste.

Il faudra tenir compte de la capacité d'interconnexion en cascade de plusieurs ensembles. Les connexions se feront au moyen d'un connecteur latéral approprié, dont l'ensemble tiendra compte dans cette réalisation multiple.

Le fonctionnement du module distributeur est conditionné par la combinaison des accès dont on disposera:
a) Double ligne téléphonique: composée par deux lignes téléphoniques séparées, pouvant même être de deux opérateurs différents, en étendant ainsi une des normes de l'ICT.
b) Ligne ADSL: ligne ADSL (avec Splitter) d'entrée que le module sépare en les deux services de voix et d'internet. Elle ne sera associée qu'à l'entrée 1.
c) Câble: accès téléphonique commutant entre les données (uniquement relié à l'entrée 1) et la voix que le propre accès fournit, en tenant compte du type d'accès des données du système.

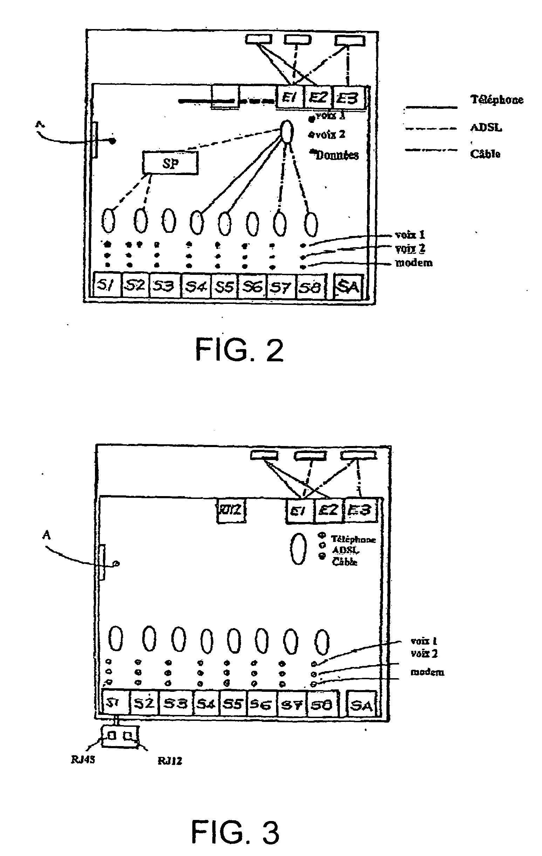

Le schéma de la figure 2 montre graphiquement le fonctionnement possible selon le type de solution d'accès choisi par l'utilisateur (afin de faire une différence entre les trois possibilités, trois solutions ont été montrées dans le même graphique), les différentes configurations restant définies de façon logique par le type de ligne (continue, de tirets, tiret et point).

Dans ce schéma, les lettres E1, E2 et E3 indiquent les diverses "entrées" du module et SP équivaut à SPLITTER. Les lettres S1 à S8 équivalent aux "sorties" et la voyelle A signifie "Alimentation".

Pour la mise en place de ces possibilités on disposera d'un bouton/poussoir sélecteur du service d'accès relié à une séquence de diodes luminescents (LED) indicateurs ou une solution équivalente, c'est-à-dire que les LED seraient agencés en un seul (tricolore, bicolore, etc., inséré dans le bouton) ou une toute autre solution appropriée.

Pour ce, le module possédera une série de sélecteurs pour chacune des sorties, en raison du service y relié; pour ce, tout comme il est fait pour la sélection du service d'accès, on disposera de boutons/poussoirs de sélection de chacune des sorties, avec des indicateurs électroluminescents (LED) de signalisation du service associé pour chacune des sorties, tel que représente le graphique de la figure 3 :

Tel que montre le schéma de ladite figure 3, la couleur des divers LED reliés aux entrées et sorties est défini de la façon suivante:
a) Diode (LED) VERT, d'activation du service d'accès et d'alimentation;
b) Diode (LED) BLEU d'activation de fonctionnalité de sortie.

Par ailleurs, on pourra disposer d'une solution de signalisation de LED intégrée dans le même bouton/poussoir.

### Les configurations de service:

Conformément aux trois types d'accès définis, les solutions que le système va offrir sont définies en raison des configurations suivantes, qui sont la base de l'ensemble:

### a) Installation de 1 Ligne téléphonique

Options des connecteurs: (Il existe deux modèles, RJ45 et RJ12)
- Le connecteur RJ45, pour le Réseau des ordinateurs (LAN)
- Le connecteur RJ12 pour la connexion téléphonique. Les connexions sont affichées de la façon suivante:
   - LED d'entrée d'accès relié au téléphone
   - LED de sortie de service connecté à la Voix1.

### b) Installation de 2 Lignes téléphoniques:

Options des connecteurs:
- Connecteur RJ 45. Réseau d'ordinateurs de zone locale (LAN)
- Connecteur RJ12: Sélection de la connexion téléphonique

Connexions effectuées:
- LED d'entrée d'accès: Téléphone
- LED de sortie de service: Voix1 ou Voix2

### c) Installation d'ADSL

Options des connecteurs:
- Connecteur RJ45: Réseau d'ordinateurs (LAN)
- Connecteur RJ12: Sélection de la connexion téléphonique (ADSL) ou de données (ADSL)
- Connexion ADSL forcée à l'Entrée 1

Connexions effectuées:
- LED d'entrée d'accès: ADSL
- LED de sortie de service: Voix1 ou Données

### d) Installation d'ADSL + Téléphone

Options des connecteurs:
- Connecteur RJ45: Réseau d'ordinateurs (LAN)
- Connecteur RJ12: Sélection de la connexion téléphonique (ADSL), connexion téléphonique (téléphone) ou de données (ADSL)

Connexion ADSL forcée à l'Entrée 1,

Connexions effectuées:
- LED d'entrée d'accès: ADSL
- LED de sortie de service: Voix1 ou Voix2 ou Données

### e) Installation de Câble

Options des connecteurs:
- Connecteur RJ45: Réseau d'ordinateurs (LAN)
- Connecteur RJ12: Sélection de la connexion téléphonique (Câble) ou de données (Câble)

Connexions effectuées:
- LED d'entrée d'accès: Câble
- LED de sortie de service: Voix1 ou Données

### f) Installation de Câble + Téléphone

Option des connecteurs:
- Connecteur RJ 45: Réseau d'ordinateurs (LAN)
- Connecteur RJ12: Sélection de la connexion téléphonique (par câble), connexion téléphonique (ligne téléphonique) ou de données (par câble)

Connexions effectuées:
- LED d'entrée d'accès: Câble
- LED de sortie de service: Voix1 ou Voix2 ou Données

Le schéma suivant fait le résumé des configurations de services:

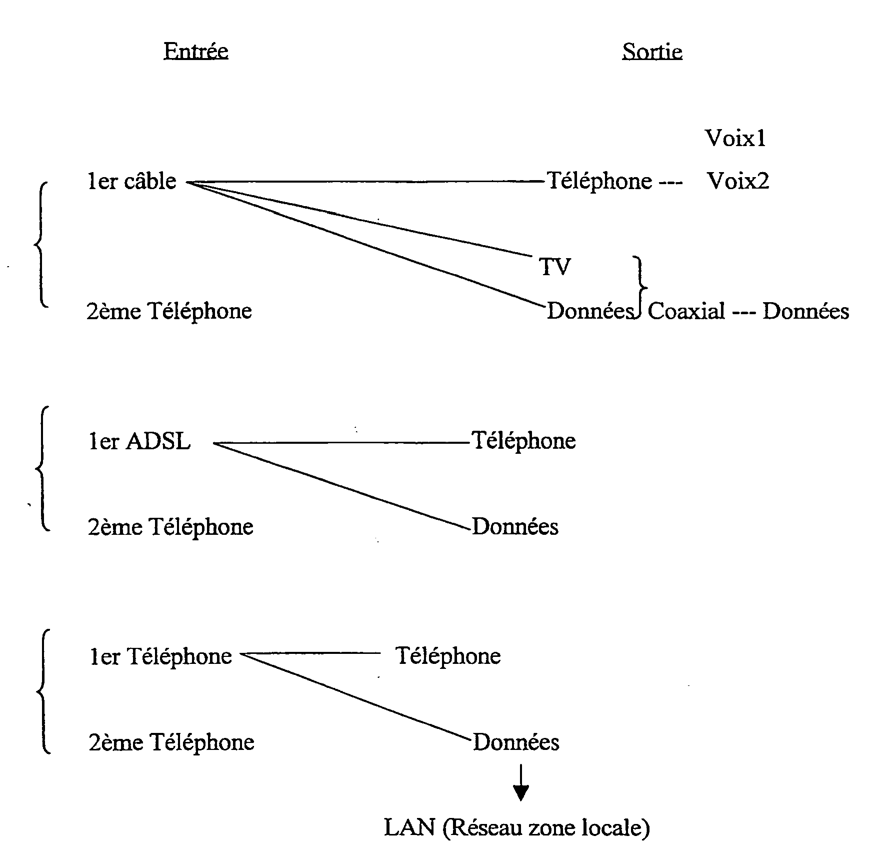

Afin de compléter la description du module distributeur configurable de services de communications objet de cette invention, des dessins sont annexés dans lesquels, à titre d'exemple non limitatif, ont été répresentés des schémas de la la mise en oeuvre de répartiteur.

Dans ces dessins,
La figure 1 est une vue schématique en plan du module objet de l'invention qui montre l'agencement des divers composants.
La figure 2 montre graphiquement un possible fonctionnement selon un type de solution d'accès choisi par l'utilisateur; et La figure 3 montre les sélecteurs pour chacune des sorties et boutons/poussoir de sélection pour lesdites sorties

Aussi bien dans les paragraphes précédents que dans le reste de la description, divers sigles sont utilisés, généralement utilisés en électronique et en informatique, qui sont définis ci-après:
- LAN: réseau de zone local
- LED: diode électroluminescent
- Ligne ADSL= Ligne à large bande
- Connecteur RJ 45 - Connecteur informatique
- Connecteur RJ12 - Connecteur téléphonique
- Splitter - Filtre ADSL
- Switch - Élément générateur de réseau

La description ayant été complétée et conformément aux dessins, il est noté que l'équipement constituant le modèle distributeur de services est formé par un corps ou module (1) pourvu des connecteurs à divers opérateurs externes ainsi que l'entrée de courant à basse tension (2).

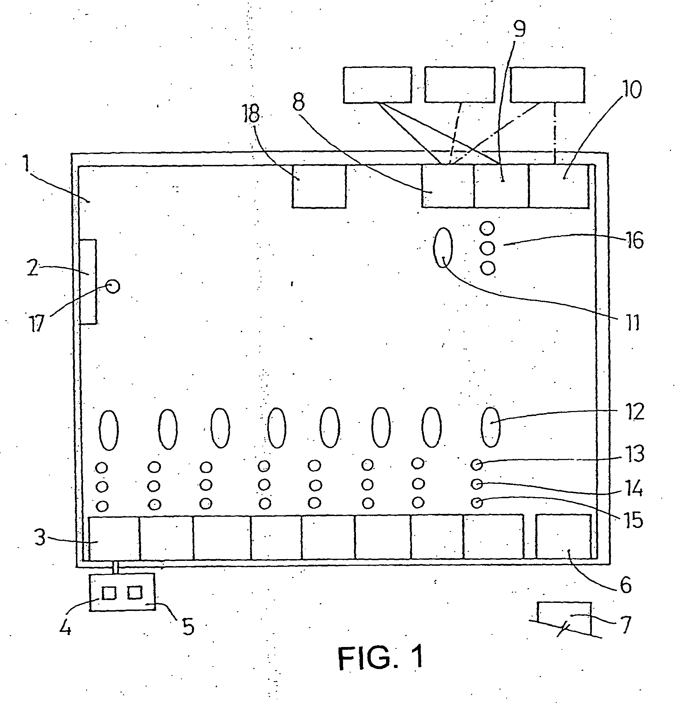

Dans ce corps se trouvent les divers composants du module distributeur configurable:
a) Le système d'entrées et de sorties qui est défini conformément à la configuration suivante, en tenant compte de l'ensemble des connecteurs associés à chacune de ces entrées et sorties et qui, dans l'exemple décrit sont:
   - 8 sorties (3) pour agrafer le câble pour la prise RJ45 (4) et par conséquent la prise RJ12(5)
   - 1 Sortie auxiliaire (6) et une prise RJ12 (18) sur lesquelles on pourra connecter un routeur ADSL
   - 3 Entrées à commuter (7), capables de connecter le câblage pour deux accès de lignes téléphoniques (8) et d'ADSL (9) et pour une troisième connexion de câble coaxial pour des données (10).
   - 1 Entrée latérale de connexion d'éléments multiples
   - 1 Sortie latérale de connexion d'éléments multiples
b) Le système de boutons/poussoirs qui permettra la génération et la configuration situés tel que représente la Figure 1 où est illustrée la définition du système, on choisira le service relié à chacune des prises de l'habitation ou assimilé, ainsi que le service d'accès configuré à l'entrée du distributeur.
   Le bouton poussoir (11) est celui permettant de choisir les entrées configurées, toujours plus d'une ligne et, dans toutes, toujours la ligne téléphonique.
   En appuyant sur le bouton-poussoir (11) un changement aura lieu, et, en même temps l'option choisie sera affichée au moyen du LED correspondant.
   En ce qui concerne les boutons-poussoirs (12) , ils permettent de choisir la sortie en deux lignes de voix (13) et (14) et une ligne de modem (15) pour les services informatiques, tels que internet, large bande, etc. à travers les sorties (3).
c) Le système d'indicateurs qui est défini par divers LED lumineux groupés en deux types: le VERT pour les entrées, et le BLEU pour les sorties.

Le VERT DES ENTRÉES: Trois LED (16) sont agencés pour la signalisation du type d'accès qui a été sélectionné: téléphonique, ADSL et Câble. Lorsque le LED reste en état non illuminé, il indique la désactivation de tout accès. Ces trois LED pourront être remplacés par un seul capable d'offrir une tonalité chromatique différente.

Le VERT d'alimentation: On dispose d'un LED (17) pour la signalisation du fonctionnement correct de l'alimentation du système. Lorsque le LED reste en état non illuminé, il indique la coupure de l'alimentation électrique ou un mauvais fonctionnement de celle-ci.

Le BLEU de sortie: On disposera de la combinaison de 8 groupes de LED (13), (14) et (15) par groupe, qui définiront le type de service concerné et qui a été configuré pour chacune des prises (3) en fonction des besoins à chaque moment.

Pour les situations b) et e) on pourra disposer d'une solution de signalisation au moyen de LED intégré dans le même bouton/poussoir, en agissant selon la codification équivalente.

Il faut signaler que les sorties (3) sont en permanence raccordées au réseau et en actif.

On a également prévu qu'il peut exister des sorties complémentaires pour les services ajoutés.

Le distributeur disposera des éléments de sécurité nécessaires pour éviter les surtensions ainsi qu'une prise de terre pour les dérivations qui pourront se produire dans le système.

L'objet de cette invention étant suffisamment décrit, il faut indiquer que toute variation de dimensions, formes, aspect exterieur et caractéristiques des materiaux employés tout cela lorsque le module décrit sera mis en oeuvre, ne changera en rien son étendue qui est définie par les revendications suivantes.

## Revendications

1. Module de distribution configurable pour habitation domestique comprenant un étage d'entrée pour deux lignes téléphoniques dont l'une supporte le service ADSL, et pour un câble d'un réseau de distribution par câble,
des étages de sortie à double connecteur permettant de raccorder des téléphones et/ou des dispositifs informatiques, les dispositifs informatiques étant de surcroît raccordés sur um même réseau local de l'habitation,
**caractérisé en ce** le module comprend:
des boutons-poussoir adaptés à configurer l'étage d'entrée pour sélectionner le service choisie et/ou la ligne choisie d'une part, à configurer chaque étage de sortie en fonction du service sélectionné pour cette sortie et du dispositif qui y est connecté d'autre part,
des diodes lumineuses étant associées à chaque bouton-poussoir de façon à permettre d'afficher la configuration sélectionnée.

2. Module de distribution configurable pour habitation domestique , conformément à la revendication précédente **caractérisé en ce** chaque étage de sortie pourvus chacune de sélecteurs consistant en des poussoirs et des signalisateurs à diodes luminescents, offre deux options de connecteurs à la sortie: le connecteur informatique RJ45, pour le réseau local, et le connecteur RJ12 pour la connexion téléphonique, en pouvant effectuer toutes les combinaisons nécessaires.

3. Module de distribution configurable pour habitation domestique conformément à la première revendication, **caractérisé en ce qu'**il dispose d'une prise complémentaire du type RJ12 qui rend possible la connexion d'un routeur ADSL et de disposer par ailleurs d'une entrée latérale pour les connexions de plusieurs modules ainsi que la sortie correspondante latérale pour des connexions multiples identiques, en disposant par ailleurs et de façon optionnelle de sorties complémentaires pour des services ajoutés.

## Claims

1. Distribution module configurable for dwelling comprising an input stage for two telephone lines one of which supports the ADSL service and another supports a cable of a distribution network via cable, output stages having a double connector allowing to connect telephone sets and/or computer devices, the computer devices being additionally connected to a same local network of the dwelling, **characterised in that** the module includes: push-buttons adapted to configure the input stage for selecting the service and/or the line chosen on the one hand, to configure each output stage depending on the service selected for the said output and on the device connected to it, on the other hand; luminescence diodes being associated to each push-button so that they allow to display the selected configuration.

2. Distribution module configurable for dwelling according to above claim, **characterised in that** each output stage, each provided with selectors consisting in push-buttons and luminescent diode signallers, offers two options of output connectors: the computer connector RJ45, for the local network and the connector RJ12 for the telephone connection, and every necessary combination being possible.

3. Distribution module configurable for dwelling according to claim 1, **characterised in that** it has a complementary outlet of RJ12 type which makes possible to connect an ADSL router and to arrange, in addition, a side input for connecting several modules as well as the side related output for identical multiple connections, arranging in addition and as an option complementary outputs for services added.

## Patentansprüche

1. Konfigurierbares Verteilermodul für häusliche Wohnungen, aufweisend:
eine Eingangsstufe für zwei Telefonleitungen, von denen eine den ADSL-Dienst unterstützt, und für ein Kabel eines Kabelverteilungsnetzes,
Ausgangsstufen mit doppelter Steckverbindungseinrichtung, die ermöglichen, Telefone und/oder Datengeräte anzuschließen, wobei die Datengeräte zusätzlich an ein- und dasselbe lokale Netz der Wohnung angeschlossen sind,
**dadurch gekennzeichnet, dass** das Modul aufweist:
Drucktasten, die ausgebildet sind, um die Eingangsstufe zu konfigurieren, um zum einen den gewählten Dienst und/oder die gewählte Leitung auszuwählen und um zum anderen jede Ausgangsstufe in Abhängigkeit von dem für diesen Ausgang gewählten Dienst sowie dem damit verbundenen Gerät zu konfigurieren,
Leuchtdioden, die jeder Drucktaste zugehörig sind, so dass ein Anzeigen der gewählten Konfiguration ermöglicht wird.

2. Konfigurierbares Verteilermodul für häusliche Wohnungen nach dem vorhergehenden Anspruch, **dadurch gekennzeichnet, dass** jede Ausgangsstufe, vorausgesetzt dass jede der Auswahleinrichtungen aus Drucktasten und Leuchtdioden-Signaleinrichtungen besteht, zwei Optionen von Steckverbindungseinrichtungen am Ausgang bietet: die Datensteckverbindungseinrichtung RJ45 für das lokale Netz und die Steckverbindungseinrichtung RJ12 für die Telefonverbindung, wobei **dadurch** alle benötigten Kombinationen bewerkstelligt werden können.

3. Konfigurierbares Verteilermodul für häusliche Wohnungen nach Anspruch 1, **dadurch gekennzeichnet, dass** es über eine komplementäre Steckbuchse vom Typ RJ12 verfügt, die einen Anschluss eines ADSL-Routers ermöglicht, und das im Übrigen über einen seitlichen Eingang zum Anschluss mehrerer Module sowie den entsprechenden seitlichen Ausgang für mehrfache identische Anschlüsse verfügt, wobei es im Übrigen optional über komplementäre Ausgänge für zusätzliche Dienste verfügt.
